# EUROPEAN PATENT APPLICATION

(11) **EP 4 822 954 A1**
(43) Date of publication of application: **14.10.2026**
(21) Application number: 23960786.4
(22) Date of filing: 06.12.2023
(51) Int. Cl.: H02K 3/38

(54) **INSULATING CAP FOR STATOR COIL AND STATOR FOR ROTATING ELECTRIC MACHINE**

(71) Applicant: Mitsubishi Generator Co., Ltd., Kobe City, Hyogo 652-8555 (JP)
(72) Inventor: NAKAJIMA, Kazutoshi, Tokyo 100-8332 (JP); SUZUKI, Keiji, Tokyo 100-8332 (JP); ONODA, Mitsuru, Tokyo 100-8332 (JP); OTAKA, Yoshihiro, Tokyo 100-8332 (JP)
(74) Representative: Witte, Weller & Partner Patentanwälte mbB
(86) International application number: PCT/JP2023/043691
(87) International publication number: WO 2025/120773

(57) **Abstract**

Provided is an insulating cap for a stator coil. A bottom coil and an upper coil are mounted in each of a plurality of slots formed in a circumferential surface of a stator core. The insulating cap includes first and second insulating cap pieces mutually combined, each of the first and second insulating cap pieces including: a bottom coil-side wall portion; an upper coil-side wall portion located at a position shifted from the bottom coil-side wall portion in a circumferential direction, on an inner side of the bottom coil-side wall portion in a radial direction; and an inclined wall portion connecting the bottom coil-side wall portion and the upper coil-side wall portion. A coil end portion of the bottom coil disposed in a first slot is disposed between the bottom coil-side wall portion of the first insulating cap piece and the bottom coil-side wall portion of the second insulating cap piece, and a coil end portion of the upper coil disposed in a second slot adjacent to the first slot is disposed between the upper coil-side wall portion of the first insulating cap piece and the upper coil-side wall portion of the second insulating cap piece.

## Description

### TECHNICAL FIELD

The present disclosure relates to an insulating cap for a stator coil and a stator for a rotating electric machine.

### BACKGROUND ART

Patent Document 1 describes a method of mutually electrically connecting lead-out bare conductor ends of an upper coil and a lower coil (bottom coil) mounted in slots of a stator core of a rotating electric machine by a connection copper belt, and subjecting the entirety of the connected part to insulation treatment. In the method, the entirety of the connected part including a part of an insulation-to-ground layer of each coil is contained in a substantially rectangular parallelepiped insulating case previously filled with an insulating filler, and is insulated.

### CITATION LIST

### PATENT DOCUMENT

[Patent Document 1] Japanese Laid-Open Patent Publication No. 2001-197697

### SUMMARY OF THE INVENTION

### PROBLEM TO BE SOLVED BY THE INVENTION

The rectangular parallelepiped insulating case described in Patent Document 1 may not be usable in a case of applying insulation to a part (stator coil jumper connection portion) connecting ends of a bottom coil and an upper coil which are respectively mounted in adjacent slots in the circumferential direction of a stator core of a rotating electric machine. In addition, the method of covering the stator coil jumper connection portion with an insulating tape may not provide appropriate coverage with the insulating tape if work skills of a worker are insufficient, and thus stable insulation performance may not be achieved.

In view of the above circumstances, the object of at least one embodiment of the present disclosure is to provide: an insulating cap for a stator coil, the insulating cap enabling appropriate insulation treatment on a part connecting coil ends of a bottom coil and an upper coil irrespective of skills of a worker, whereby stable insulation performance can be obtained; and a stator for a rotating electric machine, the stator being provided with said insulating cap.

### MEANS TO SOLVE THE PROBLEM

In order to attain the above-described object, an insulating cap for a stator coil according to at least one embodiment of the present disclosure is used for stator coils of a rotating electric machine, wherein:
a bottom coil, and an upper coil disposed inward of the bottom coil in a radial direction of the rotating electric machine are mounted in each of a plurality of slots formed in a circumferential surface of a stator core of the rotating electric machine;
the insulating cap includes a first insulating cap piece and a second insulating cap piece mutually combined, each of the first insulating cap piece and the second insulating cap piece including
   a bottom coil-side wall portion,
   an upper coil-side wall portion located at a position shifted from the bottom coil-side wall portion in a circumferential direction of the rotating electric machine, on an inner side of the bottom coil-side wall portion in the radial direction, and
   an inclined wall portion connecting the bottom coil-side wall portion and the upper coil-side wall portion;
a coil end portion of the bottom coil disposed in a first slot among the plurality of slots is disposed between the bottom coil-side wall portion of the first insulating cap piece and the bottom coil-side wall portion of the second insulating cap piece; and
a coil end portion of the upper coil disposed in a second slot adjacent to the first slot in a circumferential direction of the rotating electric machine, among the plurality of slots, is disposed between the upper coil-side wall portion of the first insulating cap piece and the upper coil-side wall portion of the second insulating cap piece.

In order to attain the above-described object, a stator for a rotating electric machine according to at least one embodiment of the present disclosure includes:
a stator core;
a stator coil; and
the insulating cap for a stator coil.

### EFFECT OF THE INVENTION

At least one embodiment of the present disclosure provides: an insulating cap for a stator coil, the insulating cap being capable of appropriately performing insulation treatment on a part connecting coil end portions of a bottom coil and an upper coil irrespective of skills of a worker, whereby stable insulation performance can be obtained; and a stator for a rotating electric machine, the stator being provided with the insulating cap.

### BRIEF DESCRIPTION OF THE DRAWINGS

[FIG. 1] FIG. 1 is a perspective partial cutaway view showing a schematic configuration of a rotating electric machine 100.
[FIG. 2] FIG. 2 is a schematic sectional view showing the configuration, in a cross section orthogonal to an axial direction of the rotating electric machine 100, of an inner circumferential portion of a stator core 2.
[FIG. 3] FIG. 3 illustrates the arrangement of a plurality of insulating caps 30 provided in the rotating electric machine 100, when the plurality of insulating caps 30 are seen from the turbine side in an axial-direction view.
[FIG. 4] FIG. 4 shows one example of a cross section, orthogonal to the axial direction, of a coil connection portion 26 and an insulating cap 30B.
[FIG. 5] FIG. 5 is a sectional view illustrating details of the configuration shown in FIG. 4.
[FIG. 6] FIG. 6 shows the insulating cap 30B as seen, along the axial direction, from the side opposite the stator core 2 in the axial direction.
[FIG. 7] FIG 7 shows a cross section, orthogonal to the axial direction, of an insulating cap 30B and a coil connection portion 26 according to another embodiment.
[FIG. 8] FIG. 8 is a sectional view illustrating details of the configuration shown in FIG. 7.
[FIG. 9] FIG. 9 is a sectional view illustrating a modification of the insulating cap 30B, the view showing another example of a cross section, orthogonal to the axial direction, of the coil connection portion 26 and the insulating cap 30B.

### DESCRIPTION OF EMBODIMENTS

Hereinafter, some embodiments of the present disclosure will be described with reference to the accompanying drawings. It is noted that dimensions, materials, shapes, relative arrangement, and the like of constituent components described in the embodiments or shown in the drawings are not intended to restrict the scope of the present disclosure thereto, but are mere explanatory examples.

For example, an expression of relative or absolute arrangement such as "in a direction", "along a direction", "parallel", "orthogonal", "centered", "concentric", and "coaxial" shall not be construed as indicating only the arrangement in a strict literal sense, but also includes a state where the arrangement is relatively displaced by a tolerance, or by an angle or a distance whereby it is possible to achieve the same function.

For example, an expression of an equal state such as "same", "equal", and "uniform" shall not be construed as indicating only the state where the feature is strictly equal, but also includes a state where there is a tolerance or a difference that can still achieve the same function.

For example, an expression of a shape such as a rectangular shape or a cylindrical shape shall not be construed as only the geometrically strict shape, but also includes a shape with unevenness or chamfers within the range in which the same effect can be achieved.

On the other hand, an expression such as "comprise", "include", "have", "contain", and "constitute" are not intended to be exclusive of other components.

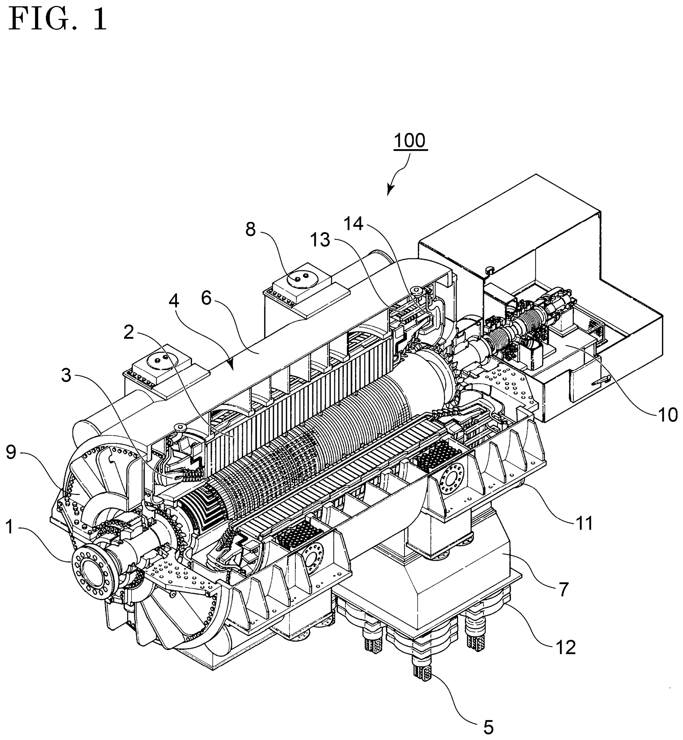

FIG. 1 is a perspective partial cutaway view showing a schematic configuration of the rotating electric machine 100 according to one embodiment of the present disclosure. For convenience of description, a part of the rotating electric machine 100 is removed in FIG. 1.

In general, rotating electric machines are roughly categorized into three types in accordance with an output (capacity) of the rotating electric machine, namely, a water-cooled rotating electric machine which cools the inside of the machine by hydrogen gas and cools a stator coil by water, a hydrogen-cooled rotating electric machine which cools the inside of the machine and a stator coil by hydrogen gas, and an air-cooled rotating electric machine which cools the inside of the machine and a stator coil by air. Insides of the water-cooled rotating electric machine and the hydrogen-cooled rotating electric machine are filled with pressurized hydrogen gas.

In the rotating electric machine (turbine generator) 100 according to the present embodiment, the inside of the machine is filled with hydrogen gas so that the inside of the machine is cooled by the hydrogen gas.

The rotating electric machine 100 includes a rotor 1 and a stator 4 disposed so as to face the outer circumferential surface of the rotor 1 at a predetermined interval from the rotor 1. The stator 4 includes a stator core 2 and stator coils 3.

In the following description, the "axial direction" refers to the axial direction of the rotating electric machine 100 (the axial direction of the rotor 1, i.e., the axial direction of the stator 4) unless specifically indicated, the "radial direction" refers to the radial direction of the rotating electric machine 100 (the radial direction of the rotor 1, i.e., the radial direction of the stator 4) unless specifically indicated, and the "circumferential direction" refers to the circumferential direction of the rotating electric machine 100 (the circumferential direction of the rotor 1, i.e., the circumferential direction of the stator 4) unless specifically indicated.

The rotating electric machine 100 includes: a high-voltage bushing (power supply terminal) 5 which outputs current from the stator coils 3 to the outside of the machine; power lines such as a connection line 13 and a lead-out line 14 which connect the stator coils 3 and the high-voltage bushing 5 to form a current path; a rotating electric machine casing 6 in which the rotor 1, the stator 4, the connection line 13, the lead-out line 14, and the like are stored and the inside of which is filled with hydrogen gas; a terminal box 7 connected to the rotating electric machine casing 6 and installed below the rotating electric machine casing 6; a hydrogen cooler 8 which is connected to the rotating electric machine casing 6 and is for cooling the inside of the machine by hydrogen gas; an end bracket 9 which closes an axial-direction end of the rotating electric machine casing 6 and stores a bearing or the like; a rocker device 10 which stores a carbon brush and a collector ring through which direct current is supplied to a coil of the rotor 1; a foot 11 to which the rotating electric machine casing 6 is fixed; and a current transformer 12 which measures current outputted from the high-voltage bushing 5 to the outside of the machine.

The rotating electric machine 100 is connected to, for example, a steam turbine or a gas turbine, transmits rotational energy of the steam turbine or the gas turbine to the rotor 1, and rotates the rotor 1 at a high speed inside the stator 4 to generate power.

The stator 4 is formed by laminating, in the axial direction, thin silicon steel sheets each having a thickness of, for example, 1 mm or less (0.35 to 0.50 mm), and the laminated silicon steel sheets are electrically insulated from each other. The stator 4 has a stator core 2 in which a plurality of slots are formed, and stator coils 3 embedded in the slots, fixed by wedges, and mounted in the stator core 2. That is, in the stator core 2, the plurality of slots in which the stator coils 3 are installed are formed, and silicon steel sheets are formed so as to be laminated in the axial direction.

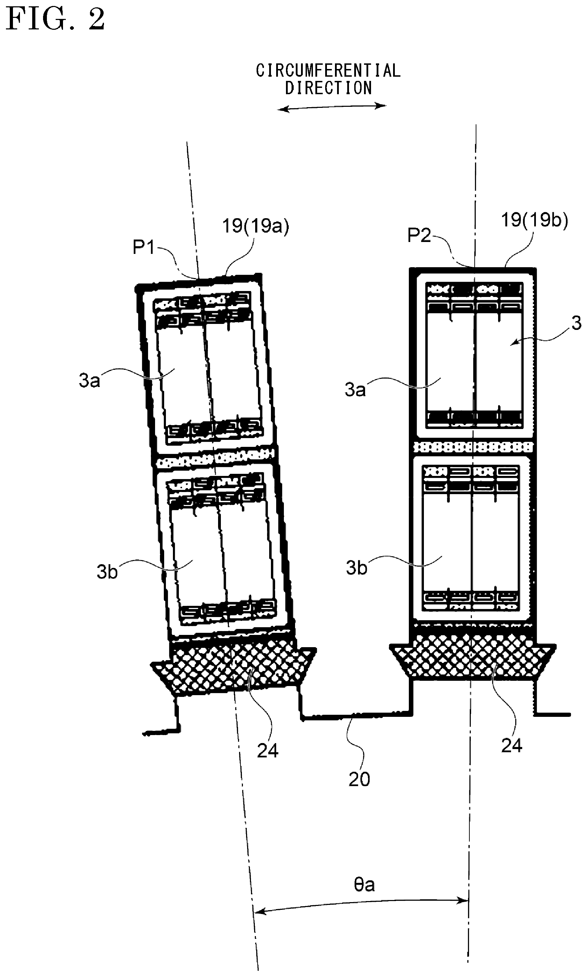

Next, the stator coils 3 and slots 19 formed in a circumferential surface 20 of the stator core 2 will be described with reference to FIG. 2. FIG. 2 is a schematic sectional view showing the configuration, in a cross section orthogonal to the axial direction, of an inner circumferential portion of the stator core 2.

As shown in FIG. 2, a plurality of slots 19 are formed at intervals in the circumferential direction, in the circumferential surface 20 of the stator core 2. The stator coils 3 include a bottom coil 3a disposed in the bottom of each of the slots 19 and an upper coil 3b disposed inward of the bottom coil 3a in the radial direction. The bottom coil 3a and the upper coil 3b are mutually electrically connected on the axial-direction outer side of the stator core 2 at axial-direction ends of the stator coils 3. The bottom coil 3a and the upper coil 3b embedded in the slot 19 are fixed by a wedge 24 disposed on the radially inner side of the slot 19. Accordingly, the bottom coil 3a and the upper coil 3b disposed inward of the bottom coil 3a in the radial direction are mounted in each of the plurality of slots 19 formed in the circumferential surface 20 of the stator core 2.

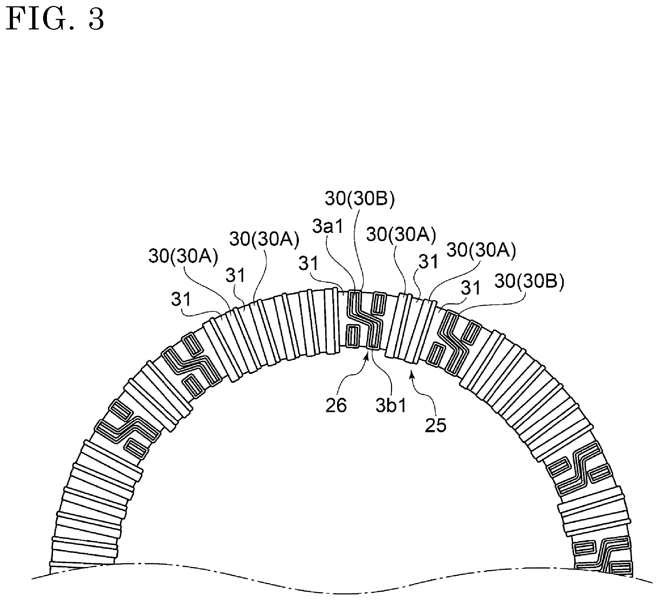

FIG. 3 illustrates the arrangement of the plurality of insulating caps 30 provided in the rotating electric machine 100, when the plurality of insulating caps 30 are seen from the turbine side in an axial-direction view.

As shown in FIG. 3, the stator 4 (see FIG. 1) of the rotating electric machine 100 includes a plurality of insulating caps 30 arranged along the circumferential direction. The plurality of insulating caps 30 are disposed at intervals in the circumferential direction, and a spacer 31 is disposed between adjacent ones of the insulating caps 30 among the plurality of insulating caps 30.

Each of the plurality of insulating caps 30 is configured so as to cover a coil connection portion connecting a coil end portion of the bottom coil 3a and a coil end portion of the upper coil 3b. A component forming the insulating cap 30 is composed of an insulating member (e.g., thermosetting resin), and may be molded into a cap shape through, for example, molding of bulk molding compound (BMC).

The plurality of insulating caps 30 include an insulating cap 30A and an insulating cap 30B. For the bottom coil 3a and the upper coil 3b disposed in the same slot 19, the insulating cap 30A is formed in a substantially rectangular parallelepiped shape so as to cover a coil connection portion 25 connecting the coil end portion of the bottom coil 3a and the coil end portion of the upper coil 3b. For the bottom coil 3a and the upper coil 3b respectively disposed in adjacent two slots 19 (see FIG. 2), the insulating cap 30B is formed so as to cover a coil connection portion 26 connecting a coil end portion 3a1 of the bottom coil 3a and a coil end portion 3b1 of the upper coil 3b. Here, the "bottom coil 3a and the upper coil 3b respectively disposed in adjacent two slots 19" refers to, for example, the bottom coil 3a disposed in a first slot 19a among the plurality of slots 19, and the upper coil 3b disposed in a second slot 19b which is a slot 19 adjacent to the first slot 19a in the circumferential direction among the plurality of slots 19, as shown in FIG. 2. It is noted that the coil end portion of the upper coil 3b disposed in the first slot 19a and the coil end portion of the bottom coil 3a disposed in the second slot 19b, shown in FIG. 2, are electrically connected via a jumper wire (not shown).

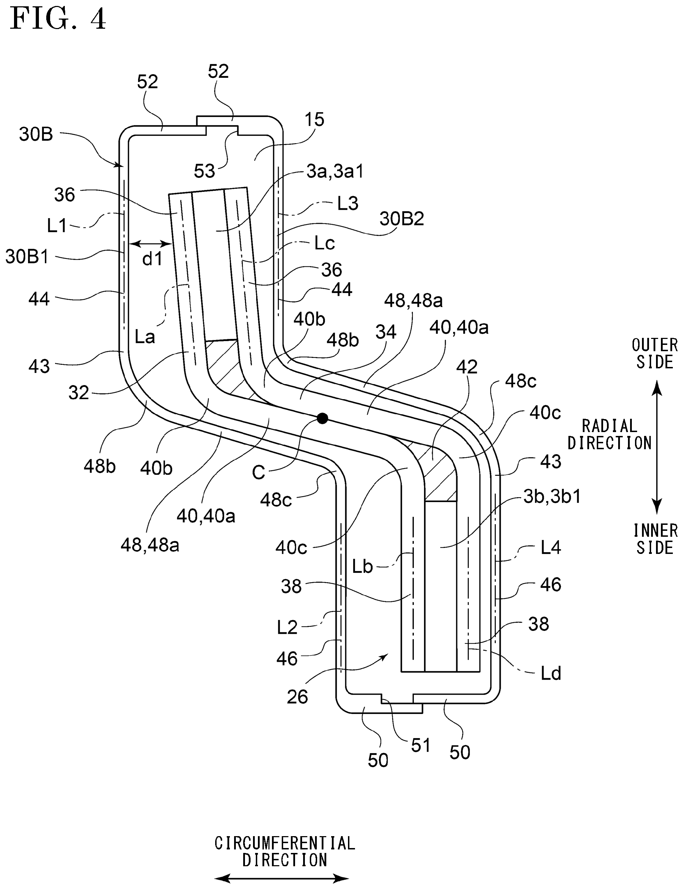

Hereinafter, one example of the configuration of the coil connection portion 26 and the insulating cap 30B will be described with reference to FIG. 4 to FIG. 6. FIG. 4 shows one example of a cross section, orthogonal to the axial direction, of the coil connection portion 26 and the insulating cap 30B.

As shown in FIG. 4, the coil connection portion 26 of the stator 4 includes a pair of connection pieces 32, 34 (jumper wire connection pieces) electrically connecting the coil end portion 3a1 of the bottom coil 3a disposed in the first slot 19a (see FIG. 2) and the coil end portion 3b1 of the upper coil 3b disposed in the second slot 19b (see FIG. 2) which is a slot 19 adjacent to the first slot 19a. Each of the pair of connection pieces 32, 34 is a conductive plate-like member (e.g., copper plate, etc.) and has a substantially S-shaped cross section orthogonal to the axial direction. The inside of the insulating cap 30B is filled with an insulating filler 15 around the pair of connection pieces 32, 34 and the coil end portions 3a1, 3b1. It is noted that, in the shown example, the coil end portion 3a1 of the bottom coil 3a and the coil end portion 3b1 of the upper coil 3b are held between the pair of connection pieces 32, 34, and each of the pair of connection pieces 32, 34 is electrically connected to the coil end portion 3a1 of the bottom coil 3a and the coil end portion 3b1 of the upper coil 3b. However, one of the pair of connection pieces 32, 34 may not be provided.

As shown in FIG. 4, in a cross section orthogonal to the axial direction, each of the pair of connection pieces 32, 34 has a bottom coil-side connection piece portion 36 having a flat plate-like shape, an upper coil-side connection piece portion 38 having a flat plate-like shape, and an inclined connection piece portion 40.

In the cross section shown in FIG. 4, the bottom coil-side connection piece portion 36 of the connection piece 32 is in contact with the coil end portion 3a1 of the bottom coil 3a disposed in the first slot 19a (see FIG. 2), and extends on a straight line La along the radial direction. The upper coil-side connection piece portion 38 of the connection piece 32 is located at a position shifted from the bottom coil-side connection piece portion 36 of the connection piece 32 in the circumferential direction, on the inner side of the bottom coil-side connection piece portion 36 of the connection piece 32 in the radial direction. In the cross section shown in FIG. 4, the upper coil-side connection piece portion 38 of connection piece 32 is in contact with the coil end portion 3b1 of the upper coil 3b disposed in the second slot 19b (see FIG. 2), and extends on a straight line Lb along the radial direction. In the cross section shown in FIG. 4, the inclined connection piece portion 40 extends in an inclined direction inclined with respect to the straight line La and the straight line Lb so as to connect the bottom coil-side connection piece portion 36 and the upper coil-side connection piece portion 38. The inclined connection piece portion 40 of the connection piece 32 includes an inclined connection plate portion 40a formed in a flat plate-like shape, a curved plate portion 40b that is curved so as to connect the inclined connection plate portion 40a and the bottom coil-side connection piece portion 36 of the connection piece 32, and a curved plate portion 40c that is curved so as to connect the inclined connection plate portion 40a and the upper coil-side connection piece portion 38 of the connection piece 32.

In the cross section shown in FIG. 4, the bottom coil-side connection piece portion 36 of the connection piece 34 is in contact with the coil end portion 3a1 of the bottom coil 3a disposed in the first slot 19a (see FIG. 2), and extends on a straight line Lc along the radial direction. The upper coil-side connection piece portion 38 of the connection piece 34 is located at a position shifted from the bottom coil-side connection piece portion 36 of the connection piece 34 in the circumferential direction, on the inner side of the bottom coil-side connection piece portion 36 of the connection piece 34 in the radial direction. In the cross section shown in FIG. 4, the upper coil-side connection piece portion 38 of the connection piece 34 is in contact with the coil end portion 3b1 of the upper coil 3b disposed in the second slot 19b (see FIG. 2), and extends on a straight line Ld along the radial direction. In the cross section shown in FIG. 4, the inclined connection piece portion 40 of the connection piece 34 extends in an inclined direction inclined with respect to each of the straight line Lc and the straight line Ld so as to connect the bottom coil-side connection piece portion 36 and the upper coil-side connection piece portion 38 of the connection piece 34. The inclined connection piece portion 40 of the connection piece 34 includes an inclined connection plate portion 40a formed in a flat plate-like shape, a curved plate portion 40b that is curved so as to connect the inclined connection plate portion 40a and the bottom coil-side connection piece portion 36 of the connection piece 34, and a curved plate portion 40c that is curved so as to connect the inclined connection plate portion 40a and the upper coil-side connection piece portion 38 of the connection piece 34.

In the cross section shown in FIG. 4, the coil end portion 3a1 of the bottom coil 3a is held between the bottom coil-side connection piece portion 36 of the connection piece 32 and the bottom coil-side connection piece portion 36 of the connection piece 34, and the coil end portion 3b1 of the upper coil 3b is held between the upper coil-side connection piece portion 38 of the connection piece 32 and the upper coil-side connection piece portion 38 of the connection piece 34. In addition, a space surrounded by the pair of connection pieces 32, 34, the coil end portion 3a1 of the bottom coil 3a, and the coil end portion 3b1 of the upper coil 3b is filled with the insulating filler 42.

As shown in FIG. 4, the insulating cap 30B includes a pair of insulating cap pieces 30B1, 30B2 that are mutually combined. The insulating cap piece 30B1 and the insulating cap piece 30B2 are molded by means of the same mold, and thus are formed in the same shape and the same dimensions. In the cross section shown in FIG. 4, the insulating cap piece 30B1 and the insulating cap piece 30B2 are mutually combined in the state of being disposed in rotational symmetry at 180° about a predetermined axis C.

As shown in FIG. 4, each of the pair of insulating cap pieces 30B1, 30B2 includes a main wall 43, a radially inner-side end wall 50, and a radially outer-side end wall 52.

The main wall 43 of the insulating cap piece 30B1 and the main wall 43 of the insulating cap piece 30B2 are disposed so as to face each other, and the pair of connection pieces 32, 34, the coil end portion 3a1 of the bottom coil 3a, the coil end portion 3b1 of the upper coil 3b, and the like are disposed between the main wall 43 of the insulating cap piece 30B1 and the main wall 43 of the insulating cap piece 30B2.

Each of the main wall 43 of the insulating cap piece 30B1 and the main wall 43 of the insulating cap piece 30B2 includes a bottom coil-side wall portion 44, an upper coil-side wall portion 46, and an inclined wall portion 48. The upper coil-side wall portion 46 of the insulating cap piece 30B1 is located at a position shifted from the bottom coil-side wall portion 44 of the insulating cap piece 30B1 in the circumferential direction, on the inner side of the bottom coil-side wall portion 44 of the insulating cap piece 30B1 in the radial direction. The inclined wall portion 48 of the insulating cap piece 30B1 connects the bottom coil-side wall portion 44 of the insulating cap piece 30B1 and the upper coil-side wall portion 46 of the insulating cap piece 30B1. The upper coil-side wall portion 46 of the insulating cap piece 30B2 is located at a position shifted from the bottom coil-side wall portion 44 of the insulating cap piece 30B2 in the circumferential direction, on the inner side of the bottom coil-side wall portion 44 of the insulating cap piece 30B2 in the radial direction. The inclined wall portion 48 of the insulating cap piece 30B2 connects the bottom coil-side wall portion 44 of the insulating cap piece 30B2 and the upper coil-side wall portion 46 of the insulating cap piece 30B1.

Each of the bottom coil-side wall portion 44 and upper coil-side wall portion 46 of the insulating cap piece 30B1 is formed in a flat plate-like shape, and each of the bottom coil-side wall portion 44 and the upper coil-side wall portion 46 of the insulating cap piece 30B2 is formed in a flat plate-like shape. The coil end portion 3a1 of the bottom coil 3a disposed in the first slot 19a (see FIG. 2), the bottom coil-side connection piece portion 36 of the connection piece 32, and the bottom coil-side connection piece portion 36 of the connection piece 34 are disposed between the bottom coil-side wall portion 44 of the insulating cap piece 30B1 and the bottom coil-side wall portion 44 of the insulating cap piece 30B2. The coil end portion 3b1 of the upper coil 3b disposed in the second slot 19b (see FIG. 2), the upper coil-side connection piece portion 38 of the connection piece 32, and the upper coil-side connection piece portion 38 of the connection piece 34 are disposed between the upper coil-side wall portion 46 of the insulating cap piece 30B1 and the upper coil-side wall portion 46 of the insulating cap piece 30B2. The inclined connection piece portion 40 of the connection piece 32 and the inclined connection piece portion 40 of the connection piece 34 are disposed between the inclined wall portion 48 of the insulating cap piece 30B1 and the inclined wall portion 48 of the insulating cap piece 30B2.

The bottom coil-side wall portion 44 of the insulating cap piece 30B1 and the bottom coil-side wall portion 44 of the insulating cap piece 30B2 are disposed parallel to each other, and in the cross section shown in FIG. 4, the bottom coil-side wall portion 44 of the insulating cap piece 30B1 and the bottom coil-side wall portion 44 of the insulating cap piece 30B2 respectively extend on straight lines along the radial direction. The upper coil-side wall portion 46 of the insulating cap piece 30B1 and the upper coil-side wall portion 46 of the insulating cap piece 30B2 are disposed parallel to each other, and in the cross section shown in FIG. 4, the upper coil-side wall portion 46 of the insulating cap piece 30B1 and the upper coil-side wall portion 46 of the insulating cap piece 30B2 respectively extend on straight lines along the radial direction. The inclined wall portion 48 of the insulating cap piece 30B1 and the inclined wall portion 48 of the insulating cap piece 30B2 are disposed parallel to each other, and in the cross section shown in FIG. 4, the inclined wall portion 48 of the insulating cap piece 30B1 extends in an inclined direction inclined with respect to both a direction in which the bottom coil-side wall portion 44 of the insulating cap piece 30B1 extends and a direction in which the upper coil-side wall portion 46 of the insulating cap piece 30B1 extends, so as to connect the bottom coil-side wall portion 44 of the insulating cap piece 30B1 and the upper coil-side wall portion 46 of the insulating cap piece 30B1.

The inclined wall portion 48 includes an inclined plate portion 48a formed in a flat plate-like shape, a curved wall portion 48b that is curved so as to connect the inclined plate portion 48a and the bottom coil-side wall portion 44, and a curved wall portion 48c that is curved so as to connect the inclined plate portion 48a and the upper coil-side wall portion 46.

In the cross section shown in FIG. 4, the bottom coil-side wall portion 44 of the insulating cap piece 30B1 extends on the straight line L1, and the upper coil-side wall portion 46 of the insulating cap piece 30B1 extends on the straight line L2 parallel to the straight line L1. In addition, in the cross section shown in FIG. 4, the bottom coil-side wall portion 44 of the insulating cap piece 30B2 extends on the straight line L3 parallel to the straight line L1, and the upper coil-side wall portion 46 of the insulating cap piece 30B2 extends on the straight line L4 parallel to the straight line L3. That is, the bottom coil-side wall portion 44 of the insulating cap piece 30B1, the upper coil-side wall portion 46 of the insulating cap piece 30B1, the bottom coil-side wall portion 44 of the insulating cap piece 30B2, and the upper coil-side wall portion 46 of the insulating cap piece 30B2 are disposed parallel to one another.

The insulating cap piece 30B1 and the connection piece 32 are disposed so as to face each other across the insulating filler 15. In a region of the insulating cap piece 30B1 facing the connection piece 32, a distance d1 between the bottom coil-side wall portion 44 of the insulating cap piece 30B1 and the bottom coil-side connection piece portion 36 of the connection piece 32 decreases toward the outer side in the radial direction.

The radially inner-side end wall 50 of the insulating cap piece 30B1 protrudes toward the insulating cap piece 30B2 side from the inner end, in the radial direction, of the upper coil-side wall portion 46 of the insulating cap piece 30B1. The radially inner-side end wall 50 of the insulating cap piece 30B2 protrudes toward the insulating cap piece 30B1 side from the inner end, in the radial direction, of the upper coil-side wall portion 46 of the insulating cap piece 30B2. In the shown exemplary embodiment, a step portion 51 is formed on the inner surface of the radially inner-side end wall 50 of the insulating cap piece 30B1, and the leading end of the radially inner-side end wall 50 of the insulating cap piece 30B2 is positioned inward, in the radial direction, of the leading end of the radially inner-side end wall 50 of the insulating cap piece 30B1, and faces the step portion 51.

The radially outer-side end wall 52 of the insulating cap piece 30B1 protrudes toward the insulating cap piece 30B2 side from the outer end, in the radial direction, of the bottom coil-side wall portion 44 of the insulating cap piece 30B1. The radially outer-side end wall 52 of the insulating cap piece 30B2 protrudes toward the insulating cap piece 30B1 side from the outer end, in the radial direction, of the bottom coil-side wall portion 44 of the insulating cap piece 30B2. In the shown exemplary embodiment, a step portion 53 is formed on the inner surface of the radially outer-side end wall 52 of the insulating cap piece 30B2, and the leading end of the radially outer-side end wall 52 of the insulating cap piece 30B1 is positioned inward, in the radial direction, of the radially outer-side end wall 52 of the insulating cap piece 30B2, and faces the step portion 53.

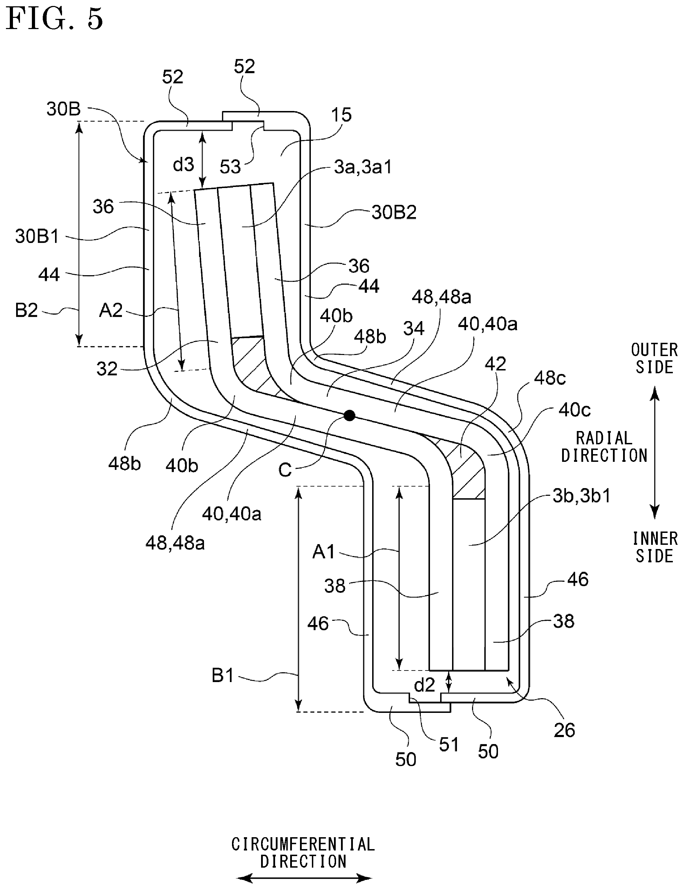

FIG. 5 is a sectional view illustrating details of the configuration shown in FIG. 4.

In the exemplary embodiment shown in FIG. 5, in a cross section orthogonal to the axial direction, a length A1 of the upper coil-side connection piece portion 38 of the connection piece 32 is longer than a length A2 of the bottom coil-side connection piece portion 36 of the connection piece 32, and a length B1 of the upper coil-side wall portion 46 of the insulating cap piece 30B1 is equal to a length B2 of the bottom coil-side wall portion 44 of the insulating cap piece 30B1. Thus, a distance d2 in the radial direction between the upper coil-side connection piece portion 38 of the connection piece 32 and the insulating cap piece 30B1 is smaller than a distance d3 in the radial direction between the bottom coil-side connection piece portion 36 of the connection piece 32 and the insulating cap piece 30B1.

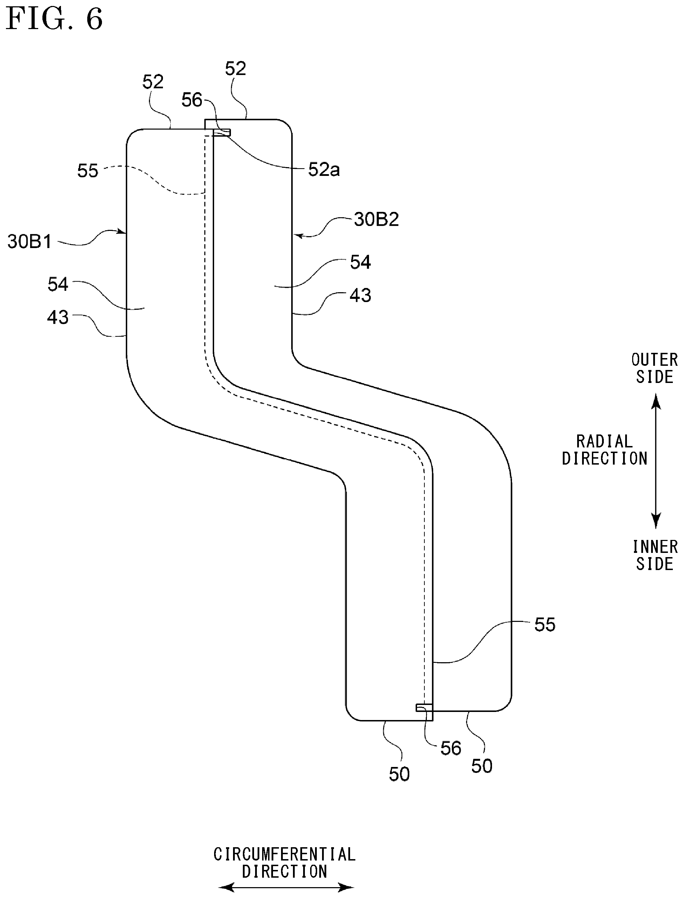

FIG. 6 shows the insulating cap 30B as seen, along the axial direction, from the side opposite the stator core 2 in the axial direction.

As shown in FIG. 6, each of the pair of insulating cap pieces 30B1, 30B2 includes an axial-direction end wall 54. The axial-direction end wall 54 of insulating cap piece 30B1 protrudes toward the insulating cap piece 30B2 side from an end, in the main wall 43 of the insulating cap piece 30B1, opposite the stator core 2 (see FIG. 2). The axial-direction end wall 54 of the insulating cap piece 30B2 protrudes toward the insulating cap piece 30B1 side from an end, in the main wall 43 of the insulating cap piece 30B2, opposite the stator core 2.

In the exemplary embodiment shown in FIG. 6, a groove 56 is formed at the position of a corner connecting the radially inner-side end wall 50 and the axial-direction end wall 54 of the insulating cap piece 30B1, at an end edge 55 opposite the main wall 43 in the axial-direction end wall 54 of the insulating cap piece 30B1. In addition, a groove 56 is formed at the position of a corner connecting the radially outer-side end wall 52 and the axial-direction end wall 54 of the insulating cap piece 30B2, at an end edge 55 opposite the main wall 43 in the axial-direction end wall 54 of the insulating cap piece 30B2, and a leading-end portion of the radially outer-side end wall 52 of the insulating cap piece 30B1 is inserted into the groove 56 of the insulating cap piece 30B2. Consequently, the insulating cap piece 30B1 and the insulating cap piece 30B2 can be combined to form the insulating cap 30B1 while inhibiting the interference of the radially outer-side end wall 52 of the insulating cap piece 30B1 with the axial-direction end wall 54 of the insulating cap piece 30B2.

Next, the effects provided by the insulating cap 30B illustrated with the references of FIG. 4 to FIG. 6 will be described.

According to the insulating cap 30B, as compare to a case of manually winding an insulating tape around the coil connection portion connecting the coil end portion 3a1 of the bottom coil 3a and the coil end portion 3b1 of the upper coil 3b, the insulating cap 30B enables appropriate insulation treatment on the coil connection portion 26 irrespective of skills of a worker, whereby stable insulation performance can be obtained. In addition, when compared to the case of manually winding the insulating tape, the use of the insulating cap 30B allows a member used for insulation to be uniformly thin, thereby facilitating heat dissipation from the coil connection portion 26 and improving ventilation performance, thus making it possible to suppress the rise of the internal temperature of the insulating cap 30B.

In addition, the insulating cap piece 30B1 and the insulating cap piece 30B2 can be molded by means of the same mold, whereby manufacturing costs of the mold used in molding can be suppressed.

Furthermore, as shown in FIG. 5, in the cross section orthogonal to the axial direction, even in a case where the length A1 of the upper coil-side connection piece portion 38 is longer than the length A2 of the bottom coil-side connection piece portion 36, the length B1 of the upper coil-side wall portion 46 of the insulating cap piece 30B1 is equal to the length B2 of the bottom coil-side wall portion 44 of the insulating cap piece 30B1 and is longer than the length A1, thus making it possible to cover the connection piece 32 by the insulating cap 30B with the insulating cap pieces 30B1, 30B2 molded by means of the same mold (by configuring the insulating cap pieces 30B1, 30B2 so as to have the same shape and the same dimensions).

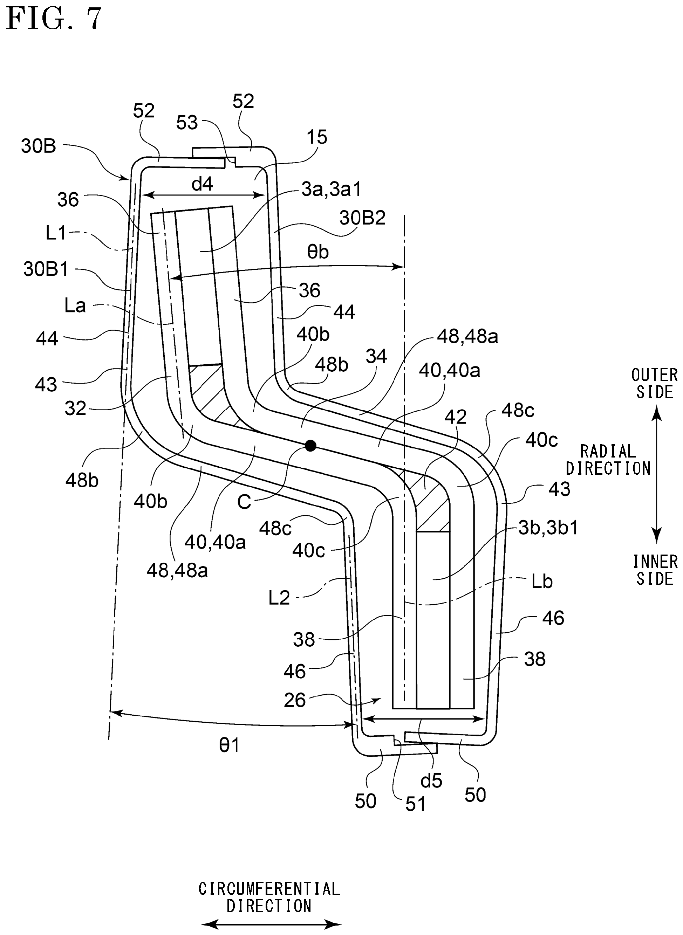

Next, a modification example of the insulating cap 30B will be described. FIG. 7 shows a cross section, orthogonal to the axial direction, of an insulating cap 30B and a coil connection portion 26 according to another embodiment. In the configuration shown in FIG. 7, unless otherwise noted, the same reference numerals as those shown in FIG. 4 indicate the same configurations as those shown in FIG. 4, and the explanation is omitted.

In the insulating cap 30B shown in FIG. 7, the insulating cap piece 30B1 and the insulating cap piece 30B2 are also molded in the same mold, and thus are formed in the same shape and the same dimensions. However, FIG. 7 is different from the configuration shown in FIG. 4 in that the bottom coil-side wall portion 44 is inclined with respect to the upper coil-side wall portion 46, in each of the insulating cap piece 30B1 and the insulating cap piece 30B2.

In the cross section shown in FIG. 7, the upper coil-side wall portion 46 of the insulating cap piece 30B1 extends along the radial direction, and the bottom coil-side wall portion 44 of the insulating cap piece 30B1 is inclined with respect to the radial direction such that a distance d4 to the bottom coil-side wall portion 44 of the insulating cap piece 30B2 decreases toward the outer side in the radial direction. In addition, the bottom coil-side wall portion 44 of the insulating cap piece 30B2 extends in the radial direction, and the upper coil-side wall portion 46 of the insulating cap piece 30B2 is inclined with respect to the radial direction such that a distance d5 to the upper coil-side wall portion 46 of the insulating cap piece 30B1 decreases toward the inner side in the radial direction.

In the cross section shown in FIG. 7, the bottom coil-side wall portion 44 of the insulating cap piece 30B1 extends on the straight line L1 inclined with respect to the radial direction, the upper coil-side wall portion 46 of the insulating cap piece 30B1 extends on the straight line L2 along the radial direction, the bottom coil-side connection piece portion 36 of the connection piece 32 extends on the straight line La along the radial direction, and the upper coil-side connection piece portion 38 of the connection piece 32 extends on the straight line Lb inclined with respect to the radial direction. In the cross section shown in FIG. 7, when an angle between the straight line La and the straight line Lb is denoted as θb, and the angle between the straight line L1 and the straight line L2 is denoted as θ1, the insulating cap 30B1 may be formed so as to satisfy θ1<θb/2.

As shown in FIG. 2, when an angle between a position P1 of the first slot 19a and a position P2 of the second slot 19b in the circumferential direction is denoted as θa, the insulating cap 30B may be formed so as to satisfy θ1<θa/2, as shown in FIG. 7. Here, the position P1 of the first slot 19a in the circumferential direction is the position of the center of the first slot 19a in the circumferential direction (the position of the center in the groove width direction of the first slot 19a), and the position P2 of the second slot 19b in the circumferential direction is the position of the center of the second slot 19b in the circumferential direction (the position of the center in the groove width direction of the second slot 19b). In some embodiments, θa may be equal to θb.

In the configuration shown in FIG. 7, the bottom coil-side wall portion 44 of the insulating cap piece 30B1 is inclined with respect to the radial direction such that the distance d4 to the bottom coil-side wall portion 44 of the insulating cap piece 30B2 decreases toward the outer side in the radial direction, and the upper coil-side wall portion 46 of the insulating cap piece 30B3 is inclined with respect to the radial direction such that the distance d5 to the upper coil-side wall portion 46 of the insulating cap piece 30B1 decreases toward the inner side in the radial direction. Thus, as compared to the configurations shown in FIG. 4 and the like, it is possible to reduce the size of the insulating cap 30B for each of the radial direction and the circumferential direction.

By forming the insulating cap 30B so as to satisfy θ1<θa/2, the insulating cap 30B can be efficiently reduced in size for each of the radial direction and the circumferential direction as compared to the configurations shown in FIG. 4 and the like. In addition, by forming the insulating cap 30B so as to satisfy θ1<θb/2, the insulating cap 30B can be efficiently reduced in size for each of the radial direction and the circumferential direction as compared to the configurations shown in FIG. 4 and the like.

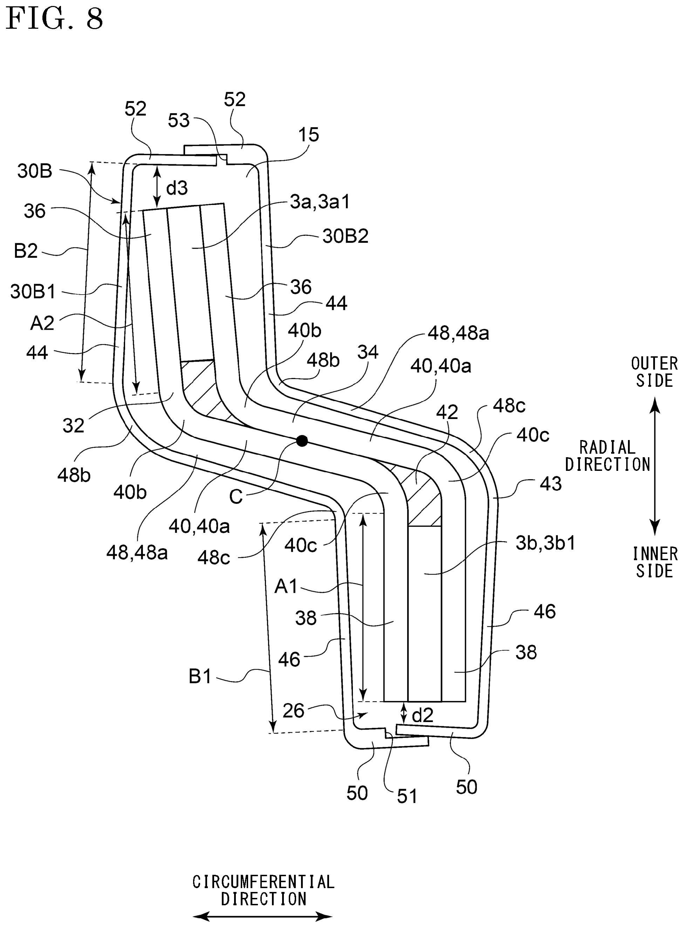

FIG. 8 is a sectional view illustrating details of the configuration shown in FIG. 7.

In the exemplary embodiment shown in FIG. 8, in a cross section orthogonal to the axial direction, the length A1 of the upper coil-side connection piece portion 38 of the connection piece 32 is longer than the length A2 of the bottom coil-side connection piece portion 36 of the connection piece 32, and the length B1 of the upper coil-side wall portion 46 of the insulating cap piece 30B1 is equal to the length B2 of the bottom coil-side wall portion 44 of the insulating cap piece 30B1. Thus, the distance d2 in the radial direction between the upper coil-side connection piece portion 38 of the connection piece 32 and the insulating cap piece 30B1 is smaller than the distance d3 in the radial direction between the bottom coil-side connection piece portion 36 of the connection piece 32 and the insulating cap piece 30B1.

Not limited to the above-described embodiments, the present disclosure includes modifications of the above-described embodiments and appropriate combinations thereof.

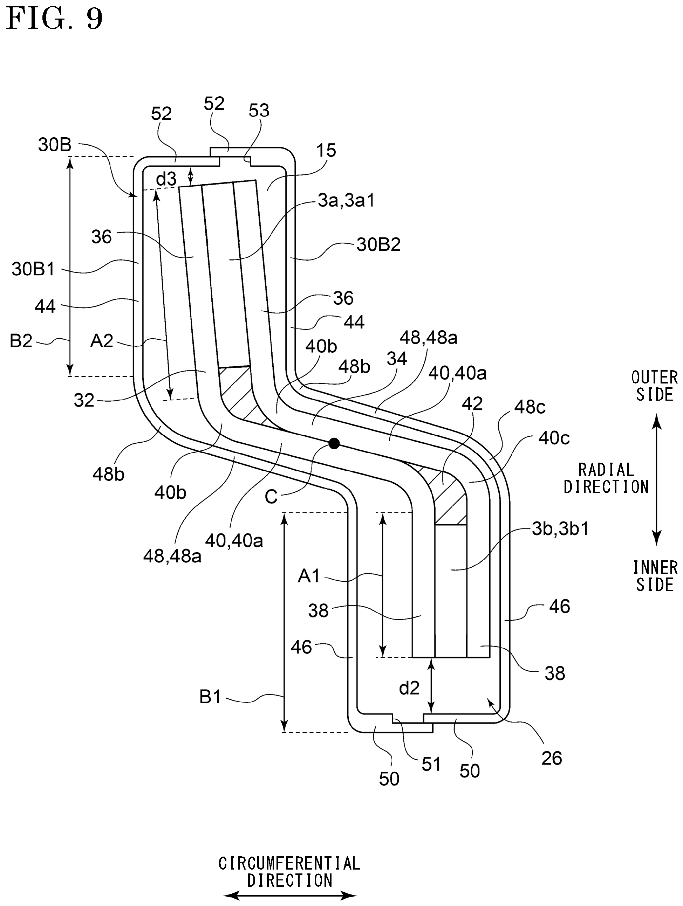

For example, as shown in FIG. 9, in a cross section orthogonal to the axial direction, the length A1 of the upper coil-side connection piece portion 38 of the connection piece 32 may be shorter than the length A2 of the bottom coil-side connection piece portion 36 of the connection piece 32. Even in this case, in the cross section orthogonal to the axial direction, the length B1 of the upper coil-side wall portion 46 of the insulating cap piece 30B1 is equal to the length B2 of the bottom coil-side wall portion 44 of the insulating cap piece 30B1, and is longer than the length A2. In addition, in the cross section shown in FIG. 9, the distance d2 in the radial direction between the upper coil-side connection piece portion 38 of the connection piece 32 and the insulating cap piece 30B1 is larger than the distance d3 in the radial direction between the bottom coil-side connection piece portion 36 of the connection piece 32 and the insulating cap piece 30B1.

Accordingly, in the cross section orthogonal to the axial direction, even in a case where the length A1 of the upper coil-side connection piece portion 38 is shorter than the length A2 of the bottom coil-side connection piece portion 36, the length B1 of the upper coil-side wall portion 46 of the insulating cap piece 30B1 is equal to the length B2 of the bottom coil-side wall portion 44 of the insulating cap piece 30B1, and is longer than the length A2, thus making it possible to cover the connection piece 32 by the insulating cap 30B with the insulating cap pieces 30B1, 30B2 molded by means of the same mold (by configuring the insulating cap pieces 30B1, 30B2 so as to have the same shape and the same dimensions).

The rotating electric machine of the present disclosure is not limited to a rotating electric machine of a hydrogen-cooled type, but can be applied as all types of rotating electric machines (generators and motors) having a jumper wire connection structure.

The contents described in the above embodiments are understood as follows, for example.
[1] An insulating cap (e.g., the above-described insulating cap 30B) for a stator coil according to at least one embodiment of the present disclosure is used for stator coils (e.g., the above-described stator coils 3) of a rotating electric machine (e.g., the above-described rotating electric machine 100), wherein:
   a bottom coil (e.g., the above-described bottom coil 3a), and an upper coil (e.g., the above-described upper coil 3b) disposed inward of the bottom coil in a radial direction of the rotating electric machine are mounted in each of a plurality of slots (e.g., the above-described plurality of slots 19) formed in a circumferential surface (e.g., the above-described circumferential surface 20) of a stator core (e.g., the above-described stator core 2) of the rotating electric machine;
   the insulating cap includes a first insulating cap piece (e.g., the above-described insulating cap piece 30B1) and a second insulating cap piece (e.g., the above-described insulating cap piece 30B2) mutually combined, each of the first and second insulating cap pieces including
      a bottom coil-side wall portion (e.g., the above-described bottom coil-side wall portion 44),
      an upper coil-side wall portion (e.g., the above-described upper coil-side wall portion 46) located at a position shifted from the bottom coil-side wall portion in a circumferential direction of the rotating electric machine, on an inner side of the bottom coil-side wall portion in the radial direction, and
      an inclined wall portion (e.g., the above-described inclined wall portion 48) connecting the bottom coil-side wall portion and the upper coil-side wall portion;
   a coil end portion (e.g., the above-described coil end portion 3a1) of the bottom coil disposed in a first slot (e.g., the above-described first slot 19a) among the plurality of slots is disposed between the bottom coil-side wall portion of the first insulating cap piece and the bottom coil-side wall portion of the second insulating cap piece; and
   a coil end portion (e.g., the above-described coil end portion 3b1) of the upper coil disposed in a second slot (e.g., the above-described second slot 19b) adjacent to the first slot in a circumferential direction of the rotating electric machine, among the plurality of slots, is disposed between the upper coil-side wall portion of the first insulating cap piece and the upper coil-side wall portion of the second insulating cap piece.

In the insulating cap for a stator coil according to the [1] above, as compared to a case of manually winding an insulating tape around a part (coil connection portion) connecting a coil end portion of a bottom coil and a coil end portion of an upper coil, the insulating cap enables appropriate insulation treatment on the coil connection portion irrespective of skills of a worker, whereby stable insulation performance can be obtained. In addition, when compared to the case of manually winding the insulating tape, the use of the insulating cap allows a member used for insulation to be uniformly thin, thereby facilitating heat dissipation from the coil connection portion and improving ventilation performance, thus making it possible to suppress the rise of the internal temperature of the insulating cap.

[2] In some embodiments of the insulating cap for a stator coil according to the [1] above,
the first insulating cap piece and the second insulating cap piece are formed in the same shape.

In the insulating cap for a stator coil according to the [2] above, the first insulating cap piece and the second insulating cap piece can be molded by means of the same mold, whereby manufacturing costs of the mold used in molding can be suppressed.

[3] In some embodiments of the insulating cap for a stator coil according to the [1] or [2] above,
in a cross section orthogonal to an axial direction of the rotating electric machine, the first insulating cap piece and the second insulating cap piece are disposed in rotational symmetry.

In the insulating cap for a stator coil according to the [3] above, the first insulating cap piece and the second insulating cap piece can be molded by means of the same mold, whereby manufacturing costs of the mold used in molding can be suppressed.

[4] In some embodiments of the insulating cap for a stator coil according to any one of the [1] to [3] above,
in a cross section orthogonal to an axial direction of the rotating electric machine, the bottom coil-side wall portion of the first insulating cap piece extends on a first straight line (e.g., the above-described straight line L1), and the upper coil-side wall portion of the first insulating cap piece extends on a second straight line (e.g., the above-described straight line L2) parallel to the first straight line.

In the insulating cap for a stator coil according to the [4] above, as compared to a case of manually winding an insulating tape around a coil connection portion connecting a coil end portion of a bottom coil and a coil end portion of an upper coil, the insulating cap enables appropriate insulation treatment on the coil connection portion irrespective of skills of a worker, whereby stable insulation performance can be obtained.

[5] In some embodiments of the insulating cap for a stator coil according to the [4] above,
in the cross section orthogonal to the axial direction, the bottom coil-side wall portion of the second insulating cap piece extends on a third straight line (e.g., the above-described straight line L3) parallel to the first straight line, and the upper coil-side wall portion of the second insulating cap piece extends on a fourth straight line (e.g., the above-described straight line L4) parallel to the third straight line.

In the insulating cap for a stator coil according to the [5] above, as compared to a case of manually winding an insulating tape around a coil connection portion connecting a coil end portion of a bottom coil and a coil end portion of an upper coil, the insulating cap enables appropriate insulation treatment on the coil connection portion irrespective of skills of a worker, whereby stable insulation performance can be obtained.

[6] In some embodiments of the insulating cap for a stator coil according to any one of the [1] to [3] above,
the bottom coil-side wall portion of the first insulating cap piece is inclined with respect to the radial direction such that a distance (e.g., the above-described distance d4) to the bottom coil-side wall portion of the second insulating cap piece decreases toward an outer side in the radial direction, and
the upper coil-side wall portion of the second insulating cap piece is inclined with respect to the radial direction such that a distance (e.g., the above-described distance d5) to the upper coil-side wall portion of the first insulating cap piece decreases toward an inner side in the radial direction.

In the insulating cap for a stator coil according to the [6] above, it is possible to reduce the size of the insulating cap for each of the radial direction and the circumferential direction of the rotating electric machine.

[7] In some embodiments of the insulating cap for a stator coil according to the [6] above,
in a cross section orthogonal to an axial direction of the rotating electric machine, the bottom coil-side wall portion of the first insulating cap piece extends on a first straight line (e.g., the above-described straight line L1), and the upper coil-side wall portion of the first insulating cap piece extends on second straight line (e.g., the above-described straight line L2) inclined with respect to the first straight line, and
when an angle between a position (e.g., the above-described position P1) of the first slot and a position (e.g., the above-described position P2) of the second slot in the circumferential direction is denoted as θa, and an angle between the first straight line and the second straight line is denoted as θ1, θ1<θa/2 is satisfied.

In the insulating cap for a stator coil according to the [7] above, it is possible to reduce the size of the insulating cap for each of the radial direction and the circumferential direction of the rotating electric machine.

[8] A stator for a rotating electric machine according to at least one embodiment of the present disclosure includes:
a stator core (e.g., the above-described stator core 2);
a stator coil (e.g., the above-described stator coil 3); and
the insulating cap for a stator coil according to any one of the [1] to [7] above.

In the stator for a rotating electric machine according to the [7] above, the insulating cap for a stator coil according to any one of the [1] to [7] above is provided, and thus the stator for a rotating electric machine enables appropriate insulation treatment on the coil connection portion irrespective of skills of a worker, whereby stable insulation performance can be obtained. In addition, the stator for a rotating electric machine allows a member used for insulation to be uniformly thin, thereby facilitating heat dissipation from the coil connection portion and improving ventilation performance, thus making it possible to suppress the rise of the internal temperature of the insulating cap.

[9] In some embodiments of the stator for a rotating electric machine according to the [8] above,
the stator includes a connection piece (e.g., the above-described connection pieces 32, 34) electrically connecting the coil end portion of the bottom coil disposed in the first slot and the coil end portion of the upper coil disposed in the second slot, the connection piece including:
a bottom coil-side connection piece portion (e.g., the above-described bottom coil-side connection piece portion 36) in contact with the coil end portion of the bottom coil disposed in the first slot;
an upper coil-side connection piece portion (e.g., the above-described upper coil-side connection piece portion 38) which is in contact with the coil end portion of the upper coil disposed in the second slot, and is located at a position shifted from the bottom coil-side wall portion in the circumferential direction, on an inner side of the bottom coil-side connection piece portion in the radial direction; and
an inclined connection piece portion (e.g., the above-described inclined connection piece portion 40) connecting the bottom coil-side connection piece portion and the upper coil-side connection piece portion.

In the stator for a rotating electric machine according to the [9] above, as compared to a case of manually winding an insulating tape around the connection piece, the stator enables appropriate insulation treatment on the coil connection portion irrespective of skills of a worker, whereby stable insulation performance can be obtained. In addition, as compared to the case of manually winding the insulating tape around the connection piece, the use of the insulating cap allows a member used for insulation to be uniformly thin, thereby facilitating heat dissipation from the coil connection portion and improving ventilation performance, thus making it possible to suppress the rise of the internal temperature of the insulating cap.

[10] In some embodiments of the stator for a rotating electric machine according to the [9] above,
the bottom coil-side wall portion of the first insulating cap piece is inclined with respect to the radial direction such that a distance (e.g., the above-described distance d4) to the bottom coil-side wall portion of the second insulating cap piece decreases toward an outer side in the radial direction, and
the upper coil-side wall portion of the second insulating cap piece is inclined with respect to the radial direction such that a distance (e.g., the above-described distance d5) to the upper coil-side wall portion of the first insulating cap piece decreases toward an inner side in the radial direction.

In the stator for a rotating electric machine according to the [10] above, it is possible to reduce the size of the insulating cap for each of the radial direction and the circumferential direction of the rotating electric machine.

[11] In some embodiments of the stator for a rotating electric machine according to the [9] or [10] above,
in a cross section orthogonal to an axial direction of the rotating electric machine, the bottom coil-side wall portion of the first insulating cap piece extends on a first straight line (e.g., the above-described straight line L1), the upper coil-side wall portion of the first insulating cap piece extends on a second straight line (e.g., the above-described straight line L2) inclined with respect to the first straight line, the bottom coil-side connection piece portion extends on a third straight line (e.g., the above-described straight line La), and the upper coil-side connection piece portion extends on a fourth straight line (e.g., the above-described straight line Lb) inclined with respect to the third straight line, and
when an angle between the first straight line and the second straight line is denoted as θ1, and an angle between the third straight line and the fourth straight line is denoted as θb, θ1<θb/2 is satisfied.

In the stator for a rotating electric machine according to the [11] above, it is possible to reduce the size of the insulating cap for each of the radial direction and the circumferential direction of the rotating electric machine.

[12] In some embodiments of the stator for a rotating electric machine according to any one of the [9] to [11] above,
in a cross section orthogonal to an axial direction of the rotating electric machine, the upper coil-side connection piece portion is longer than the bottom coil-side connection piece portion, a length (e.g., the above-described length B1) of the upper coil-side wall portion of the first insulating cap piece is equal to a length (e.g., the above-described length B2) of the bottom coil-side wall portion of the first insulating cap piece, and is longer than a length (e.g., the above-described length A1) of the upper coil-side connection piece portion.

In the stator for a rotating electric machine according to the [12] above, even in a case where the upper coil-side connection piece portion is longer than the bottom coil-side connection piece portion, it is possible to cover the connection piece by the insulating cap with the first insulating cap piece and the second insulating cap piece molded by means of the same mold (by configuring the first insulating cap piece and the second insulating cap piece so as to have the same shape and the same dimensions).

[13] In some embodiments of the stator for a rotating electric machine according to any one of the [9] to [11] above,
in a cross section orthogonal to an axial direction of the rotating electric machine, the upper coil-side connection piece portion is shorter than the bottom coil-side connection piece portion, a length (e.g., the above-described length B1) of the upper coil-side wall portion of the first insulating cap piece is equal to a length (e.g., the above-described length B2) of the bottom coil-side wall portion of the first insulating cap piece, and is longer than a length (e.g., the above-described length A2) of the bottom coil-side connection piece portion.

In the stator for a rotating electric machine according to the [13] above, even in a case where upper coil-side connection piece portion is shorter than the bottom coil-side connection piece portion, it is possible to cover the connection piece by the insulating cap with first insulating cap piece and the second insulating cap piece molded by means of the same mold (by configuring the first insulating cap piece and the second insulating cap piece so as to have the same shape and the same dimensions).

### DESCRIPTION OF THE REFERENCE CHARACTERS

1 rotor
2 stator core
3 stator coil
3a bottom coil
3a1 coil end portion
3b upper coil
3b1 coil end portion
4 stator
5 high-voltage bushing
6 rotating electric machine casing
7 terminal box
8 hydrogen cooler
9 end bracket
10 rocker device
11 foot
12 current transformer
13 connection line
14 lead-out line
15, 42 filler
19 slot
19a first slot
19b second slot
20 circumferential surface
24 wedge
25, 26 coil connection portion
30, 30A, 30B insulating cap
30B1, 30B2 insulating cap piece
31 spacer
32, 34 connection piece
36 bottom coil-side connection piece portion
38 upper coil-side connection piece portion
40 inclined connection piece portion
40a inclined connection plate portion
40b, 40c curved plate portion
43 main wall
44 bottom coil-side wall portion
46 upper coil-side wall portion
48 inclined wall portion
48a inclined plate portion
48b, 48c curved wall portion
50 radially inner-side end wall
51, 53 step portion
52 radially outer-side end wall
54 axial-direction end wall
55 end edge
56 groove
100 rotating electric machine

## Claims

1. An insulating cap for a stator coil, the insulating cap being used for stator coils of a rotating electric machine, wherein:
a bottom coil, and an upper coil disposed inward of the bottom coil in a radial direction of the rotating electric machine are mounted in each of a plurality of slots formed in a circumferential surface of a stator core of the rotating electric machine;
the insulating cap comprises a first insulating cap piece and a second insulating cap piece mutually combined, each of the first insulating cap piece and the second insulating cap piece comprising
a bottom coil-side wall portion,
an upper coil-side wall portion located at a position shifted from the bottom coil-side wall portion in a circumferential direction of the rotating electric machine, on an inner side of the bottom coil-side wall portion in the radial direction, and
an inclined wall portion connecting the bottom coil-side wall portion and the upper coil-side wall portion;
a coil end portion of the bottom coil disposed in a first slot among the plurality of slots is disposed between the bottom coil-side wall portion of the first insulating cap piece and the bottom coil-side wall portion of the second insulating cap piece; and
a coil end portion of the upper coil disposed in a second slot adjacent to the first slot in a circumferential direction of the rotating electric machine, among the plurality of slots, is disposed between the upper coil-side wall portion of the first insulating cap piece and the upper coil-side wall portion of the second insulating cap piece.

2. The insulating cap for a stator coil according to claim 1, wherein the first insulating cap piece and the second insulating cap piece are formed in the same shape.

3. The insulating cap for a stator coil according to claim 2, wherein, in a cross section orthogonal to an axial direction of the rotating electric machine, the first insulating cap piece and the second insulating cap piece are disposed in rotational symmetry.

4. The insulating cap for a stator coil according to claim 1, wherein, in a cross section orthogonal to an axial direction of the rotating electric machine, the bottom coil-side wall portion of the first insulating cap piece extends on a first straight line, and the upper coil-side wall portion of the first insulating cap piece extends on a second straight line parallel to the first straight line.

5. The insulating cap for a stator coil according to claim 4, wherein, in the cross section orthogonal to the axial direction, the bottom coil-side wall portion of the second insulating cap piece extends on a third straight line parallel to the first straight line, and the upper coil-side wall portion of the second insulating cap piece extends on a fourth straight line parallel to the third straight line.

6. The insulating cap for a stator coil according to claim 1, wherein
the bottom coil-side wall portion of the first insulating cap piece is inclined with respect to the radial direction such that a distance to the bottom coil-side wall portion of the second insulating cap piece decreases toward an outer side in the radial direction, and
the upper coil-side wall portion of the second insulating cap piece is inclined with respect to the radial direction such that a distance to the upper coil-side wall portion of the first insulating cap piece decreases toward an inner side in the radial direction.

7. The insulating cap for a stator coil according to claim 6, wherein,
in a cross section orthogonal to an axial direction of the rotating electric machine, the bottom coil-side wall portion of the first insulating cap piece extends on a first straight line, and the upper coil-side wall portion of the first insulating cap piece extends on a second straight line inclined with respect to the first straight line, and
when an angle between a position of the first slot and a position of the second slot in the circumferential direction is denoted as θa, and an angle between the first straight line and the second straight line is denoted as θ1, θ1<θa/2 is satisfied.

8. A stator for a rotating electric machine, comprising:
a stator core;
a stator coil; and
the insulating cap for a stator coil according to claim 1.

9. The stator for a rotating electric machine according to claim 8, wherein
the stator comprises a connection piece electrically connecting the coil end portion of the bottom coil disposed in the first slot and the coil end portion of the upper coil disposed in the second slot, the connection piece comprising:
a bottom coil-side connection piece portion in contact with the coil end portion of the bottom coil disposed in the first slot;
an upper coil-side connection piece portion which is in contact with the coil end portion of the upper coil disposed in the second slot, and is located at a position shifted from the bottom coil-side wall portion in the circumferential direction, on an inner side of the bottom coil-side connection piece portion in the radial direction; and
an inclined connection piece portion connecting the bottom coil-side connection piece portion and the upper coil-side connection piece portion.

10. The stator for a rotating electric machine according to claim 9, wherein:
the bottom coil-side wall portion of the first insulating cap piece is inclined with respect to the radial direction such that a distance to the bottom coil-side wall portion of the second insulating cap piece decreases toward an outer side in the radial direction; and
the upper coil-side wall portion of the second insulating cap piece is inclined with respect to the radial direction such that a distance to the upper coil-side wall portion of the first insulating cap piece decreases toward an inner side in the radial direction.

11. The stator for a rotating electric machine according to claim 10, wherein,
in a cross section orthogonal to an axial direction of the rotating electric machine, the bottom coil-side wall portion of the first insulating cap piece extends on a first straight line, the upper coil-side wall portion of the first insulating cap piece extends on a second straight line inclined with respect to the first straight line, the bottom coil-side connection piece portion extends on a third straight line, and the upper coil-side connection piece portion extends on a fourth straight line inclined with respect to the third straight line, and
when an angle between the first straight line and the second straight line is denoted as θ1, and an angle between the third straight line and the fourth straight line is denoted as θb, θ1<θb/2 is satisfied.

12. The stator for a rotating electric machine according to claim 9, wherein, in a cross section orthogonal to an axial direction of the rotating electric machine, the upper coil-side connection piece portion is longer than the bottom coil-side connection piece portion, a length of the upper coil-side wall portion of the first insulating cap piece is equal to a length of the bottom coil-side wall portion of the first insulating cap piece, and is longer than a length of the upper coil-side connection piece portion.

13. The stator for a rotating electric machine according to claim 9, wherein, in a cross section orthogonal to an axial direction of the rotating electric machine, the upper coil-side connection piece portion is shorter than the bottom coil-side connection piece portion, a length of the upper coil-side wall portion of the first insulating cap piece is equal to a length of the bottom coil-side wall portion of the first insulating cap piece, and is longer than a length of the bottom coil-side connection piece portion.
